# EUROPÄISCHE PATENTSCHRIFT

(11) **EP 2 021 150 B1**
(45) Veröffentlichungstag und Bekanntmachung des Hinweises auf die Patenterteilung: **24.11.2010**
(21) Anmeldenummer: 07725218.7
(22) Anmeldetag: 15.05.2007
(51) Int. Cl.: B23Q 39/02

(54) **WERKZEUGMASCHINE**
MACHINE TOOL
MACHINE-OUTIL

(30) Priorität: 30.05.2006 DE 102006026186
(43) Veröffentlichungstag der Anmeldung: 11.02.2009
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Beck, Jürgen
(86) Internationale Anmeldenummer: PCT/EP2007/004299
(87) Internationale Veröffentlichungsnummer: WO 2007/137698

(56) Entgegenhaltungen:
- EP-A1- 0 538 515
- DE-A1- 1 952 050
- DE-A1- 3 146 429
- DE-A1- 10 213 778
- DE-A1- 19 528 404
- US-A- 5 885 199

## Beschreibung

Die Erfindung betrifft eine Werkzeugmaschine gemäß dem Oberbegriff des Anspruchs 1, wie z.B. aus der DE-A-19528404 bekannt.

Bei dieser besteht stets das Problem, dass einerseits die Zahl der einsetzbaren Werkzeuge möglichst groß sein sollte und andererseits der Raumbedarf für den Einsatz der zur Verfügung stehenden Werkzeuge möglichst gering gehalten werden soll.

Diese Aufgabe wird bei einer Werkzeugmaschine der eingangs beschriebenen Art durch die kennzeichnenden Merkmale des Anspruchs 1 gelöst.

Unter einer Werkzeugrichtung ist dabei die Richtung des Werkzeugs zu verstehen, die durch eine Vorschub- und/oder Zustellrichtung des Werkzeugs bestimmt ist oder dieser entspricht.

Der Vorteil der erfindungsgemäßen Lösung ist darin zu sehen, dass damit eine einfache Möglichkeit geschaffen wurde, möglichst raumsparend und unaufwändig einen Werkzeugträgerkopf mit mehreren Werkzeugen zu versehen, der aufgrund der günstigen räumlichen Anordnung eine optimale Einsetzbarkeit der Werkzeuge gewährleistet.

Die Werkzeuge sind so angeordnet, daß die mindestens zwei Werkzeugebenen parallel zur Drehachse verlaufen, so dass dadurch beim Drehen des Werkzeugträgerkopfes die Werkzeuge in geometrisch einfacher Relation zur Werkstückträgereinheit zur Verfügung stehen.

Die erfindungsgemäße Lösung sieht vor, dass die Werkzeugebenen parallel zu der Drehachse verlaufen, so dass die Ausrichtung der Werkzeugrichtungen sich bei Drehen des Werkzeugträgerkopfes um die Drehachse nicht ändert.

Die Anordung der Werkzeugebenen sieht vor, dass die mindestens zwei Werkzeugebenen des Werkzeugträgerkopfes durch eine gemeinsame Gerade hindurchverlaufen.

Insbesondere in den Fällen, in denen der Werkzeugträgerkopf mehr als zwei Werkzeugebenen aufweist, sieht eine besonders zweckmäßige Lösung vor, dass alle Werkzeugebenen des Werkzeugträgerkopfes durch die Gerade hindurchverlaufen.

Dabei ist vorgesehen, dass die gemeinsame Gerade innerhalb eines geometrischen Zylinderraums um die Drehachse liegt, der einen einem mittleren Radius des Führungsarms entsprechenden Radius aufweist.

Der Vorteil dieser Lösung ist darin zu sehen, dass durch die Anordnung der Geraden in dem Zylinderraum nahe der Drehachse die Möglichkeit geschaffen wird, dass bei der Bearbeitung eines Werkstücks die durch Bewegen eines in einer der Werkzeugebenen angeordneten Werkzeugs in der Werkzeugrichtung auftretenden Kräfte mit möglichst geringen Momenten auf den Führungsarm wirken und somit dieser in der Lage ist, diese Kräfte torsionsarm, noch besser im Wesentlichen torsionsfrei, aufzunehmen.

Besonders günstig ist es dabei, wenn der Zylinderraum einen dem 0,5-fachen mittleren Radius des Führungsarms entsprechenden Radius aufweist.

Noch besser ist es, wenn der Zylinderraum einen dem 0,2-fachen mittleren Radius des Führungsarms entsprechenden Radius aufweist.

Besonders günstig ist diese Lösung dann, wenn die gemeinsame Gerade mit der Drehachse zusammenfällt. Diese Lösung hat weiterhin den Vorteil, dass damit beim Einsatz der in den Werkzeugen eingesetzten Werkzeuge im Wesentlichen keine Drehmomente auf den Führungsarm wirken.

Hinsichtlich der anzuordnenden Werkzeuge wurden im Zusammenhang mit der bisherigen Beschreibung der erfindungsgemäßen Lösung nur insoweit Angaben gemacht, als mindestens ein Werkzeug pro Werkzeugebene vorgesehen ist.

Besonders günstig ist es, wenn sich in mindestens einer der Werkzeugebenen mehrere Werkzeuge mit ihren Werkzeugrichtungen erstrecken, welch letztere durch Vorschub- und/oder Zustellrichtungen der Werkzeuge bestimmt sind, insbesondere diesen entsprechen.

Eine besonders günstige Konzeption sieht vor, dass in mindestens zwei der Werkzeugebenen mehrere sich mit ihrer Werkzeugrichtung in diesen erstreckende Werkzeuge angeordnet sind.

Die Anordnung der mehreren in einer Werkzeugebene angeordneten Werkzeuge wurde nicht näher spezifiziert. Eine besonders günstige Lösung sieht vor, dass die mehreren sich mit ihrer Werkzeugrichtung in der jeweiligen Werkzeugebene erstreckenden Werkzeuge in einem Linearwerkzeugträger des Werkzeugträgerkopfes angeordnet sind.

Hinsichtlich der Ausrichtung des Linearwerkzeugträgers wurden keine näheren Angaben gemacht. Besonders günstig ist es, wenn der Linearwerkzeugträger in einer zur Vorschubrichtung des Werkzeugträgerkopfes relativ zur Werkzeugträgerbasis parallelen Reihenrichtung aufgereihte Werkzeugaufnahmen aufweist, wobei in diese Werkzeugaufnahmen die Werkzeuge einsetzbar sind.

Es ist aber auch denkbar, im Rahmen der erfindungsgemäßen Lösung in einer der Werkzeugebenen ein in einer Werkzeugspindel angeordnetes Werkzeug vorzusehen, welches sich mit seiner Werkzeugachse in der Werkzeugebene erstreckt.

Ein derartiges Werkzeug ist in einfacher Weise als angetriebenes Werkzeug realisierbar.

Vorzugsweise ist dabei vorgesehen, dass die Werkzeugachse quer zur Drehachse ausgerichtet ist, da damit in einfacher Weise die Möglichkeit besteht, mit einem derartigen Werkzeug optimal zu bearbeiten. Insbesondere ist vorgesehen, dass die Werkzeugachse senkrecht zur Drehachse verläuft.

Hinsichtlich der Ausrichtung der Werkzeugebenen wurden bislang keine näheren Angaben gemacht. So könnten beispielsweise beliebig viele Werkzeugebenen vorgesehen sein.

Eine besonders günstige Lösung sieht vor, dass aufeinanderfolgende Werkzeugebenen, das heißt in einer Umlaufrichtung um die Gerade, in der sich die Werkzeugebenen schneiden, einen Winkel einschließen, der größer ist als 90° und kleiner als 180°.

Noch besser ist es, wenn der Winkel größer als 100°, kleiner als 170° ist und vorteilhafter ist ferner eine Lösung, bei welcher der Winkel größer als 110° und kleiner als 160° ist.

Eine besonders vorteilhafte Lösung sieht vor, dass der Winkel zwischen aufeinanderfolgenden Werkzeugebenen ungefähr 120° beträgt.

Ergänzend zu der bisher beschriebenen Ausführungsform sieht eine weitere Ausführungsform der erfindungsgemäßen Lösung vor, dass die Werkzeugträgereinheit eine Werkzeugträgerbasis und einen relativ zur Werkzeugträgerbasis mittels eines Führungsarms längs einer Vorschubachse bewegbaren und um eine zur Vorschubachse parallele Drehachse drehbaren Werkzeugträgerkopf aufweist, dass der Werkzeugträgerkopf fest mit dem Führungsarm verbunden ist, dass der Werkzeugträgerkopf eine Werkzeugspindel umfasst und dass ein Werkzeugspindelgehäuse des Werkzeugträgerkopfes einen Zusatzwerkzeugträger aufweist.

Der Vorteil dieser Lösung ist darin zu sehen, dass einerseits die Möglichkeit besteht, eine Werkzeugspindel für Fräsbearbeitungen vorzusehen und andererseits noch die Möglichkeit besteht, zusätzliche Werkzeuge durch die Zusatzwerkzeugträger vorzusehen.

Ein derartiger Zusatzwerkzeugträger könnte prinzipiell an jeder Stelle des Werkzeugspindelgehäuses angeordnet sein.

Beispielsweise wäre es denkbar, den Zusatzwerkzeugträger auf einer der Werkzeugaufnahme gegenüberliegenden Seite am Werkzeugspindelgehäuse anzuordnen.

Eine besonders günstige Lösung sieht jedoch vor, dass der Zusatzwerkzeugträger an dem Werkzeugspindelgehäuse auf mindestens einer Seite der Werkzeugspindelachse angeordnet ist.

Eine weitere zweckmäßige Lösung sieht vor, dass das Werkzeugspindelgehäuse auf mehreren Seiten einen Zusatzwerkzeugträger trägt, so dass die Möglichkeit besteht, mehrere derartige Zusatzwerkzeugträger einzusetzen und somit die Zahl der einsetzbaren Werkzeuge noch weiter zu erhöhen.

Besonders günstig für den Einsatz der Werkzeuge der Zusatzwerkzeugträger ist es, wenn das Werkzeugspindelgehäuse auf einander gegenüberliegenden Seiten einen Zusatzwerkzeugträger trägt.

Insbesondere im Hinblick auf die Drehbarkeit des Werkzeugspindelgehäuses um die Drehachse ist es günstig, wenn die Zusatzwerkzeugträger auf einander gegenüberliegenden Seiten der Drehachse am Werkzeugspindelgehäuse angeordnet sind, da sie dann durch einfaches Drehen des Werkzeugspindelgehäuses um die Drehachse in Einsatz bringbar sind.

Um die Zahl der einsetzbaren Werkzeuge weiter erhöhen zu können, ist zweckmäßigerweise vorgesehen, dass der Zusatzwerkzeugträger als Mehrfachwerkzeugträger ausgebildet ist.

Ein derartiger Mehrfachwerkzeugträger könnte beispielsweise in einer zweidimensionalen Fläche angeordnete Werkzeuge aufweisen.

Besonders günstig ist es jedoch, wenn der Mehrfachwerkzeugträger als Linearwerkzeugträger ausgebildet ist, da ein derartiger Linearwerkzeugträger räumlich günstige Bedingungen für die Anordnung der mehreren Werkzeuge bei gleichzeitig geringer Störung der übrigen Werkzeuge beim Einsatz eines der Werkzeuge am Werkstück aufweist.

Ein derartiger Linearwerkzeugträger könnte in unterschiedlichster Art und Weise an dem Werkzeugspindelgehäuse angeordnet sein.

Beispielsweise wäre es denkbar, den Linearwerkzeugträger parallel zu einer Werkzeugspindelachse auszurichten.

Besonders günstig ist es jedoch, wenn der Linearwerkzeugträger in einer zur Vorschubrichtung einer Werkzeugspindel parallelen Reihenrichtung aufgereihte Werkzeugaufnahmen aufweist, wobei die Vorschubrichtung die Richtung ist, längs welcher eine Bewegung des Werkzeugspindelgehäuses relativ zur Werkzeugträgerbasis erfolgt.

Derartige Werkzeugaufnahmen sind üblicherweise Werkzeughalteraufnahmen, in welche Werkzeuge tragende Werkzeughalter einsetzbar sind. Es ist aber auch denkbar, die Werkzeugaufnahmen so auszubilden, dass in diese direkt Werkzeuge, wie beispielsweise Bohrwerkzeuge, einsetzbar sind.

Um besonders günstige räumliche Möglichkeiten zum Einsatz der Werkzeuge zu schaffen ist vorzugsweise vorgesehen, dass alle Werkzeugaufnahmen des Linearwerkzeugträgers in einer Werkzeugebene liegen.

Hinsichtlich der Anordnung des Werkzeugspindelgehäuses an dem Führungsarm wurden bislang keine näheren Angaben gemacht. So sieht eine vorteilhafte Lösung vor, dass das Werkzeugspindelgehäuse fest mit einem vorderen Ende des Führungsarmes verbunden ist.

Die Werkzeugspindel kann in unterschiedlichster Art und Weise ausgebildet und relativ zur Drehachse des Werkzeugträgerkopfes angeordnet sein. Eine vorteilhafte Lösung sieht vor, dass die Werkzeugspindel eine quer zu der Drehachse ausgerichtete Werkzeugspindelachse aufweist.

Besonders günstig ist es, wenn die Werkzeugspindel so ausgebildet ist, dass diese eine quer zur Vorschubrichtung des Werkzeugträgerkopfes relativ zur Werkzeugträgerbasis ausgerichtete Werkzeugspindelachse aufweist.

Ferner könnte beispielsweise eine in dem Werkzeugspindelgehäuse gelagerte Spindelwelle an beiden Enden mit einer Werkzeugaufnahme versehen sein. Vorteilhafterweise ist jedoch vorgesehen, dass die in dem Werkzeugspindelgehäuse gelagerte Spindelwelle an einem Ende mit einer Werkzeugaufnahme versehen ist.

Ferner ist vorzugsweise die Werkzeugaufnahme an der Spindelwelle so angeordnet, dass diese relativ zu der Drehachse des Werkzeugträgerkopfes auf einer Seite derselben angeordnet ist.

Ergänzend zu der vorstehend beschriebenen Ausführungsform sieht eine weitere vorteilhafte Lösung vor, dass die Werkzeugträgereinheit eine Werkzeugträgerbasis und einen relativ zur Werkzeugträgerbasis mittels eines Führungsarms längs einer Vorschubachse bewegbaren und um eine zur Vorschubachse parallele Drehachse drehbaren Werkzeugträgerkopf aufweist, dass der Werkzeugträgerkopf fest mit dem Führungsarm verbunden ist und dass der Werkzeugträgerkopf als Mehrfachlinearwerkzeugträger ausgebildet ist, der sternförmig um die Drehachse herum angeordnete Linearwerkzeugträger umfasst, die in einer zur Vorschubrichtung des Mehrfachlinearwerkzeugträgers relativ zur Werkzeugträgerbasis parallelen Reihenrichtung aufgereihte Werkzeugaufnahmen aufweisen.

Derartige Mehrfachlinearwerkzeugträger haben den Vorteil, dass eine Vielzahl von Werkzeugen in geometrisch günstiger Ausrichtung zueinander einsetzbar sind.

Vorzugsweise ist dabei vorgesehen, dass alle Werkzeugaufnahmen jedes der Linearwerkzeugträger in einer Werkzeugebene liegen.

Im Zusammenhang mit der bisherigen Beschreibung der erfindungsgemäßen Lösung wurde die Art der Werkstückträgereinheit nicht näher spezifiziert.

Beispielsweise könnte eine derartige Werkstückträgereinheit ein Drehtisch sein, auf welchem ein Werkstück positionierbar ist.

Alternative Lösungen einer derartigen Werkstückträgereinheit können alle Arten von Werkstückträgern sein, wie sie aus Bearbeitungszentren bekannt sind.

Eine vorteilhafte Lösung einer erfindungsgemäßen Werkstückträgereinheit sieht vor, dass die Werkstückträgereinheit als Werkstückspindeleinheit ausgebildet ist, in welcher ein Werkstück zu einer Drehbearbeitung rotierend antreibbar ist und in welcher ein Werkstück aber ebenfalls im Rahmen einer C-Achse der Werkstückspindeleinheit zur Vorschubbewegung drehbar oder in verschiedenen Drehstellungen positionierbar ist.

Ferner ist zur Bearbeitung eines Werkstücks in einer derartigen Werkstückträgereinheit der Werkzeugmaschine noch eine Relativbewegung der Werkstückträgereinheit zur Werkzeugträgereinheit in einer X-Richtung der Werkzeugmaschine erforderlich.

Eine derartige Bewegbarkeit der Werkstückträgereinheit relativ zur Werkzeugträgereinheit in X-Richtung lässt sich beispielsweise durch eine Bewegbarkeit der Werkstückträgereinheit relativ zur Werkzeugträgereinheit in X-Richtung realisieren.

Alternativ dazu ist es aber auch denkbar, die Werkzeugträgereinheit relativ zur Werkstückträgereinheit in X-Richtung zu bewegen.

Des Weiteren ist zur Bearbeitung des Werkstücks in einer derartigen Werkstückträgereinheit in der Regel noch eine Relativbewegung zwischen der Werkstückträgereinheit und der Werkzeugträgereinheit erforderlich.

Auch eine derartige Relativbewegung lässt sich entweder durch eine Relativbewegung der Werkstückträgereinheit zur Werkzeugträgereinheit oder eine Relativbewegung der Werkzeugträgereinheit zur Werkstückträgereinheit in der Z-Richtung realisieren.

Im Zusammenhang mit der bisherigen Erläuterung der einzelnen Ausführungsbeispiele wurde nicht näher darauf eingegangen, wie die Bewegung des Führungsarms relativ zur Werkzeugträgerbasis erfolgen soll.

So sieht eine vorteilhafte Lösung vor, dass an der Werkzeugträgerbasis eine Antriebseinheit für die Bewegung des Führungsarms relativ zu der Werkzeugträgerbasis vorgesehen ist.

Diese Antriebseinheit ist insbesondere so ausgebildet, dass sie einen Drehantrieb umfasst, dessen Rotor mit dem Führungsarm verbunden ist und dessen Stator drehfest in einem Gehäuse der Antriebseinheit geführt ist. Damit besteht in einfacher Weise die Möglichkeit, den Führungsarm um seine Längsachse zu drehen und somit eine Drehbewegung des an dem Führungsarm sitzenden Werkzeugrevolvers als Ganzes auszuführen.

Ferner ist vorzugsweise vorgesehen, dass der Stator des Drehantriebs durch einen Linearantrieb relativ zum Gehäuse der Antriebseinheit verschiebbar ist.

Damit besteht auch die Möglichkeit, durch Verschieben des Stators und des mit diesem axial unverschieblich gekoppelten Rotors den Führungsarm in Richtung seiner Längsachse und somit in der Vorschubrichtung zu verschieben.

Beispielsweise ist ein derartiger Linearantrieb als Spindelantrieb ausgebildet.

Hinsichtlich der Anordnung des Gehäuses der Antriebseinheit wurden bislang keine näheren Angaben gemacht.

So ist beispielsweise das Gehäuse zweckmäßigerweise mit der Werkzeugträgerbasis verbunden.

Insbesondere sieht eine zweckmäßige Lösung vor, dass das Gehäuse der Antriebseinheit fest mit der Dreh-Längsführung der Werkzeugträgerbasis für den Führungsarm verbunden ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine schematische Frontansicht eines ersten Ausführungsbeispiels einer erfindungsgemäßen Werkzeugmaschine;
- Figur 2: einen Schnitt längs Linie 2-2 in Figur 1;
- Figur 3: eine vergrößerte Darstellung einer Antriebseinheit einer erfindungs- gemäßen Werkzeugträgereinheit;
- Figur 4: eine vergrößerte Darstellung eines Werkzeugträgerkopfes beim ersten Ausführungsbeispiel;
- Figur 5: eine Ansicht in Richtung des Pfeils X in Figur 4;
- Figur 6: eine Darstellung ähnlich Figur 1 einer Einsatzmöglichkeit von Werk- zeugen eines Zusatzwerkzeugträgers;
- Figur 7: eine Darstellung ähnlich Figur 1 einer zweiten Einsatzmöglichkeit von Werkzeugen eines Zusatzwerkzeugträgers;
- Figur 8: eine Darstellung ähnlich Figur 4 zur Erläuterung von Varianten des ersten Ausführungsbeispiels;
- Figur 9: eine schematische Ansicht eines zweiten Ausführungsbeispiels einer erfindungsgemäßen Werkzeugmaschine und
- Figur 10: einen Schnitt längs Linie 10-10 in Figur 8.

Ein erstes Ausführungsbeispiel einer erfindungsgemäßen Werkzeugmaschine, insbesondere eines Drehbearbeitungszentrums, umfasst ein als Ganzes mit 10 bezeichnetes Maschinengestell, mit einer Gestellbasis 12, welche mit ihrer Unterseite 14 auf einer Standfläche 16 ruht und einem sich über der Gestellbasis 12 erhebenden Maschinenbettkörper 18, welcher eine erste Säule 20 und eine zweite Säule 22 umfasst, die im Abstand voneinander angeordnet sind und sich mit ungefähr parallel zueinander verlaufenden Längsachsen 24, 26 von der Gestellbasis 12 weg erstrecken, wobei die Längsachsen 24, 26 vorzugsweise quer zur Standfläche 16, vorzugsweise senkrecht zu dieser, verlaufen.

Die beiden Säulen 20, 22 könnten sich prinzipiell unabhängig voneinander über der Gestellbasis 12 erheben. Weit stabiler ist jedoch ein Aufbau des Maschinenbettkörpers 18, bei welchem die beiden Säulen 20, 22 durch eine erste Querverstrebung 28 und eine zweite Querverstrebung 30 miteinander verbunden sind.

Ferner sind die beiden Säulen 20, 22 in einem derartigen Abstand voneinander angeordnet, dass zwischen diesen ein ausreichend großer Durchlass 32 besteht, der im Fall der Querverstrebungen 28, 30 allseitig von dem Maschinenbettkörper umschlossen ist, so dass der Maschinenbettkörper 18 insgesamt jochähnlich ausgebildet ist und somit jochähnlich geschlossen den Durchlass 32 umgibt.

Ferner weist die erste Säule 20 eine erste Frontseite 34 auf und die zweite Säule 22 weist eine zweite Frontseite 36 auf, die einem Arbeitsraum 40 zugewandt sind, der auf einer Seite des Maschinenbettkörpers 18 angeordnet ist und vor den beiden Frontseiten 34, 36 sowie vor dem Durchlass 32 liegt und sich quer zu den Längsachsen 24, 26 und in Richtung parallel zu den Längsachsen 26 vor dem Maschinenkörper 18 ausdehnt.

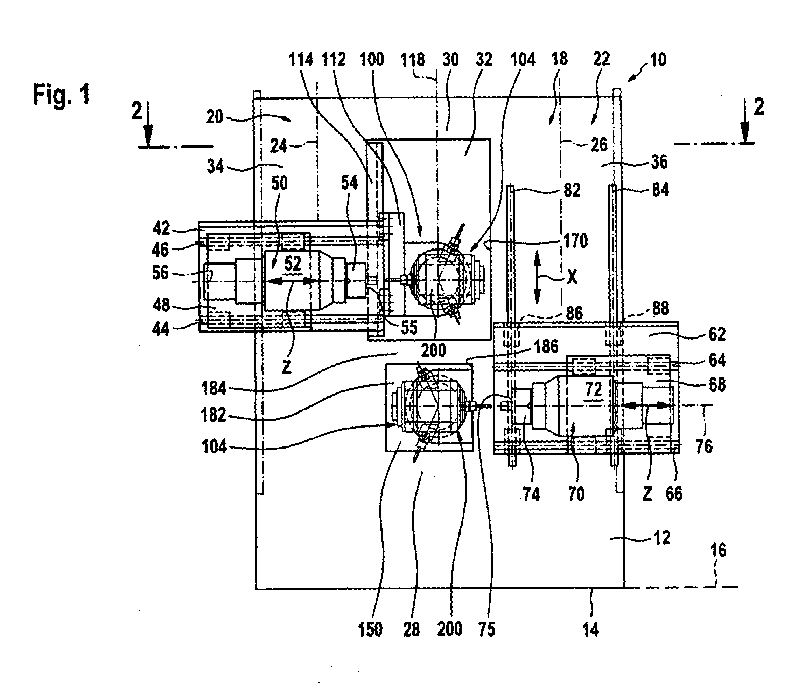

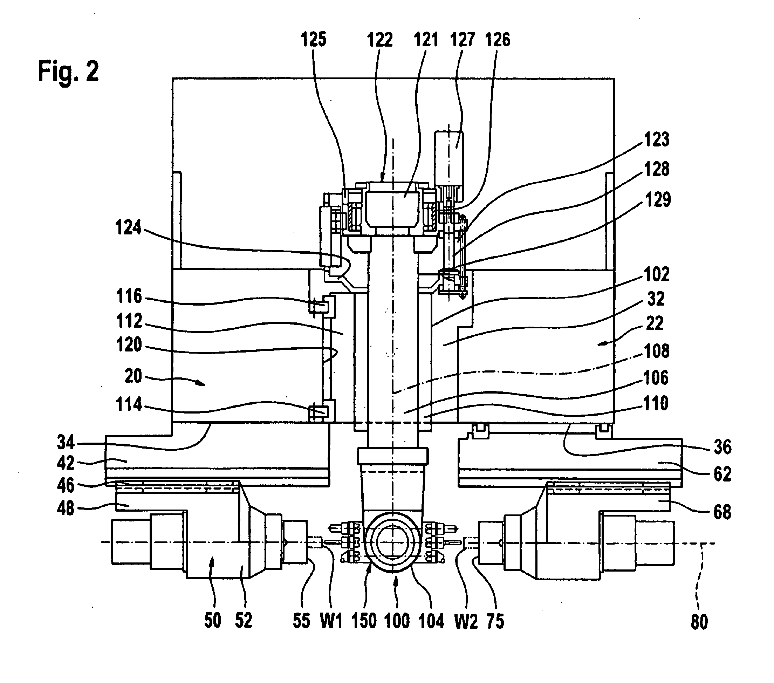

Wie ferner in Figur 1 und 2 dargestellt, ist an der ersten Frontseite 34 ein Grundkörper 42 mit parallel zueinander verlaufenden Schlittenführungen 44, 46 angeordnet, die sich quer zu der Längsachse 24 der ersten Säule 20 erstrecken und auf denen ein Spindelschlitten 48 geführt ist, auf dem eine als Ganzes mit 50 bezeichnete erste Werkstückspindeleinheit angeordnet ist, die ein erstes Werkstückspindelgehäuse 52 umfasst, in welchem eine erste Werkstückspindel 54 um eine erste Werkstückspindelachse 56 drehbar gelagert ist.

Vorzugsweise verläuft die Werkstückspindelachse 56 parallel zu den Schlittenführungen 44, 46 und außerdem im Wesentlichen in horizontaler Richtung.

Durch die auf dem Grundkörper 42 sitzenden Schlittenführungen 44, 46 ist somit die erste Werkstückspindeleinheit 50 in Richtung parallel zur ersten Werkstückspindelachse 56 und somit in einer sogenannten Z-Richtung relativ zur ersten Säule 20 bewegbar.

Auf der zweiten Frontseite 36 der zweiten Säule 22 ist ebenfalls ein Grundkörper 62 vorgesehen, auf welchem ebenfalls quer zu der Längsachse 26 verlaufende Schlittenführungen 64, 66 angeordnet sind, auf denen ein Spindelschlitten 68 verfahrbar angeordnet ist.

Auch der Spindelschlitten 68 trägt eine zweite Werkstückspindeleinheit 70 mit einem zweiten Werkstückspindelgehäuse 72, in welchem eine zweite Werkstückspindel 74 um eine zweite Werkstückspindelachse 76 drehbar gelagert ist.

Insbesondere liegen die erste Werkstückspindelachse 56 und die zweite Werkstückspindelachse 76 in einer als Ganzes mit 80 bezeichneten Spindelebene, die vorzugsweise parallel zu den Frontseiten 34 und 36 und im Abstand von diesen verläuft.

Prinzipiell wäre es denkbar, den Grundkörper 62 stationär an der Frontseite 36 anzuordnen und zwar so, dass die erste und die zweite Werkstückspindelachsen 56 und 76 miteinander fluchten.

Es sind bei dem ersten Ausführungsbeispiel, so wie in Figur 1 und 2 dargestellt, auf der Frontseite 36 Schlittenführungen 82, 84 vorgesehen, auf denen der Grundkörper 62 mit Führungskörpern 86, 88 geführt ist, wobei die Schlittenführungen 82, 84 vorzugsweise ungefähr parallel zur Längsachse 26 der Säule 22 verlaufen.

Somit ist die zweite Werkstückspindeleinheit 70 einerseits durch den Spindelschlitten 68 ebenfalls in Z-Richtung bewegbar und andererseits durch Verfahren des Grundkörpers 32 auf den Schlittenführungen 82 und 84 relativ zur zweiten Säule 22 noch in einer sogenannten X-Richtung, die senkrecht zu den Spindelachsen 56 und 76 verläuft.

Die erste Werkstückspindel 54 und die zweite Werkstückspindel 74 sind so ausgebildet, dass auf der jeweils der anderen Werkstückspindel 74 bzw. 54 zugewandten Seite eine Werkstückspanneinrichtung 55, 75 vorgesehen ist, durch welche ein erstes Werkstück W1 in der ersten Werkstückspindel 54 und ein zweites Werkstück W2 in der zweiten Werkstückspindel 74 fixierbar und zur Bearbeitung desselben um die jeweilige Werkstückspindelachse 56 bzw. 76 drehbar ist.

Wie in Figur 1 und 2 dargestellt, ist das erfindungsgemäße Drehbearbeitungszentrum mit einer als Ganzes mit 100 bezeichneten Werkzeugträgereinheit versehen, die eine sich teilweise in dem Durchlass 32 erstreckende Werkzeugträgerbasis 102 und einen in dem Arbeitsraum 40 angeordneten Werkzeugträgerkopf 104 aufweist.

Der Werkzeugträgerkopf 104 sitzt dabei auf einem Führungsarm 106, welcher relativ zur Werkzeugträgerbasis 102 in Richtung einer Längsachse 108 des Führungsarms 106 verschiebbar in der Werkzeugträgerbasis 102 gelagert ist und außerdem in der Werkzeugträgerbasis 102 um die Längsachse 108 des Führungsarms 106 drehbar ist.

Hierzu ist vorzugsweise der Führungsarm 106 in einer Längs- und Drehführung 110 der Werkzeugträgerbasis 102 geführt.

Die Längs- und Drehführung 110 der Werkzeugträgerbasis 102 sitzt dabei auf einem Werkzeugträgerschlitten 112, welcher seinerseits an Schlittenführungen 114, 116 geführt ist.

Die Schlittenführungen 114, 116 sitzen auf einer ersten Querseite 120 der ersten Säule 20, die dem Durchlass 32 und der gegenüberliegenden zweiten Säule 22 zugewandt ist.

Dabei erstrecken sich die Schlittenführungen 114, 116 vorzugsweise parallel zur Längsachse 24 der ersten Säule 20, so dass der Werkzeugträgerschlitten 112 in dem Durchlass 32 längs der ersten Säule 20 bewegbar ist, vorzugsweise in der X-Richtung.

Somit besteht die Möglichkeit, ein in dem Werkzeugträgerkopf 104 gehaltenes Werkzeug WZ1 in Richtung des in der ersten Werkstückspindel 54 gehaltenen Werkstücks W1 in X-Richtung zuzustellen.

Ferner ist die Längs- und Drehführung 110 für den Führungsarm 106 so auf dem Werkzeugträgerschlitten 112 angeordnet, dass, wie insbesondere in Figur 2 dargestellt, die Längsachse 108 des Führungsarms 106 quer zu den Schlittenführungen 114, 116 und somit auch quer zur Spindelebene 80 verläuft. Vorzugsweise verläuft die Längsachse 108 senkrecht zur Spindelführungsebene 80.

Damit ist der Werkzeugträgerkopf 104 nicht nur durch Bewegen des Werkzeugträgerschlittens 112 in der X-Richtung relativ zum Werkstück W1 bewegbar, sondern auch quer zu der X-Richtung in Richtung der Längsachse 108 und somit in einer Y-Richtung bewegbar sowie um die Längsache 108, das heißt um eine sogenannte B-Achse, drehbar.

Insgesamt ist somit der Werkzeugträgerkopf 104 in einer Werkzeugführungsebene 118, die parallel zur X-Richtung und parallel zur Y-Richtung verläuft, bewegbar, wobei die Werkzeugführungsebene 118 quer, vorzugsweise senkrecht, zur Spindelführungsebene 80 verläuft.

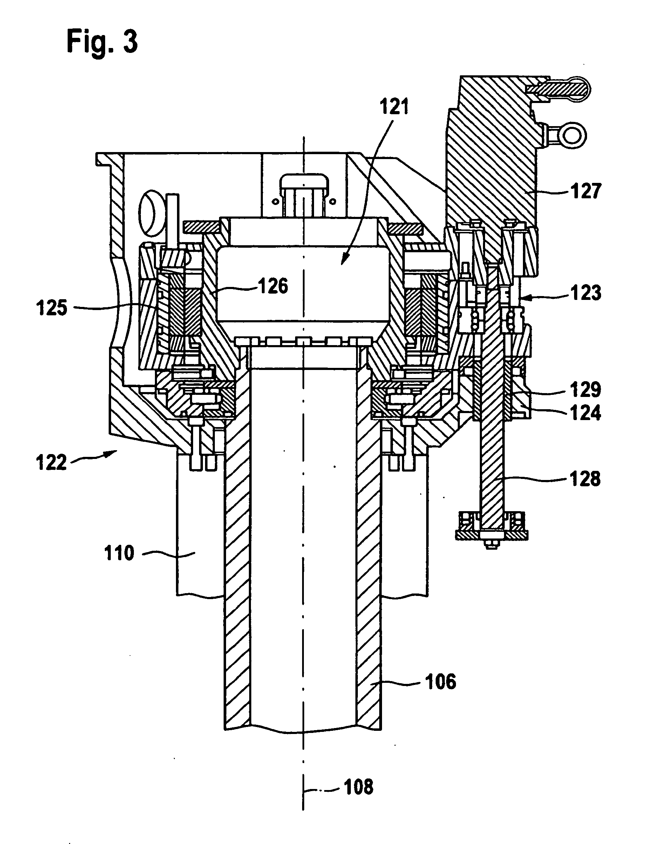

Für die Bewegungen in der Y-Richtung und die Drehung um die B-Achse ist, wie in Figur 2 und Figur 3 dargestellt, ein als Ganzes mit 122 bezeichnete Antriebseinheit vorgesehen, deren Gehäuse 124 an der Längs- und Drehführung 110 fixiert ist, und die auf einer dem Werkzeugträgerkopf 104 gegenüberliegenden Seite des Maschinenbettkörpers 18 angeordnet ist.

Dabei sind in dem Gehäuse 124 ein Drehantrieb 121 und ein Linearantrieb 123 vorgesehen.

Der Drehantrieb 121 umfasst einen Stator 125 des Drehantriebs 121, insbesondere eines Torque-Motors, der in dem Gehäuse in Richtung parallel zur Längsachse 108 verschieblich, jedoch drehfest geführt, während ein Rotor 126 des Drehantriebs, unmittelbar an einem Ende des Führungsarms 106 angeordnet ist, so dass mittels des Drehantriebs 121 der Führungsarm 106 relativ zu dem Gehäuse 124 und somit zu der Dreh-Längsführung 110 um die Längsachse 108 und somit um die B-Achse drehbar ist.

Ferner ist der Stator 125 axial unverschiebbar, jedoch drehbar mit dem Rotor 126 verbunden, so dass ein axiales Verschieben des Stators 125 in Richtung der Längsachse 108 eine Vorschubbewegung des Führungsarms 106 und folglich des Werkzeugträgerkopfs 104 in Richtung der Längsachse 108 und somit in Y-Richtung der Werkzeugmaschine bewirkt.

Zur linearen Verschiebung des Stators 125 relativ zum Gehäuse 124 ist der Linearantrieb 123 mit einem an dem Stator 126 sitzenden Antriebsmotor 127 und einer Spindel 128 versehen, deren Spindelmutter 129 fest in dem Gehäuse 124 sitzt, so dass ein Drehen der Spindel 128 den Stator 125 relativ zum Gehäuse 124 in Richtung der Längsachse 108 verschiebt.

Bei dem ersten Ausführungsbeispiel, dargestellt in Figur 1, ist noch eine zweite Werkzeugträgereinheit 150 stationär an einer Querseite 170 der zweiten Säule 22 angeordnet und somit nicht verschiebbar.

Damit ist es zum Bearbeiten von in der zweiten Werkstückspindeleinheit 70 gehaltenen Werkstücken W2 erforderlich, die Bewegung in X-Richtung dadurch zu erzeugen, dass die zweite Werkstückspindeleinheit 70 in X-Richtung bewegt wird, und zwar durch Verschieben des Grundkörpers 62 auf den Schlittenführungen 82, 84.

Im Übrigen ist der Werkzeugträger 154 relativ zur Werkzeugträgerbasis 152 in gleicher Weise bewegbar, wie im Zusammenhang mit dem zweiten Ausführungsbeispiel beschrieben.

Bei dem ersten Ausführungsbeispiel ist in dem Durchlass 32 zwischen den Säulen 20, 22 lediglich die erste Werkzeugträgereinheit 100 in X-Richtung bewegbar angeordnet.

Ferner ist die zweite Werkzeugträgereinheit 150 in einem eigens für diese vorgesehenen Durchlass 182 zwischen den Säulen 20, 22 angeordnet, wobei die Durchlässe 182, 32 durch eine Querverstrebung 184 von einander getrennt sind, die zusätzlich zur Verbesserung der Steifigkeit des Maschinenbettkörpers 18 beiträgt.

Bei diesem Ausführungsbeispiel umfasst die Werkzeugträgerbasis 152 ebenfalls die Längs- und Drehführung 110 und ist diesbezüglich identisch ausgebildet wie die Werkzeugträgereinheit 100, die ihrerseits jedoch unmittelbar mit einer an dem Durchlass 182 angrenzenden weiteren Querseite 186 der zweiten Säule 22 stationär gehalten ist.

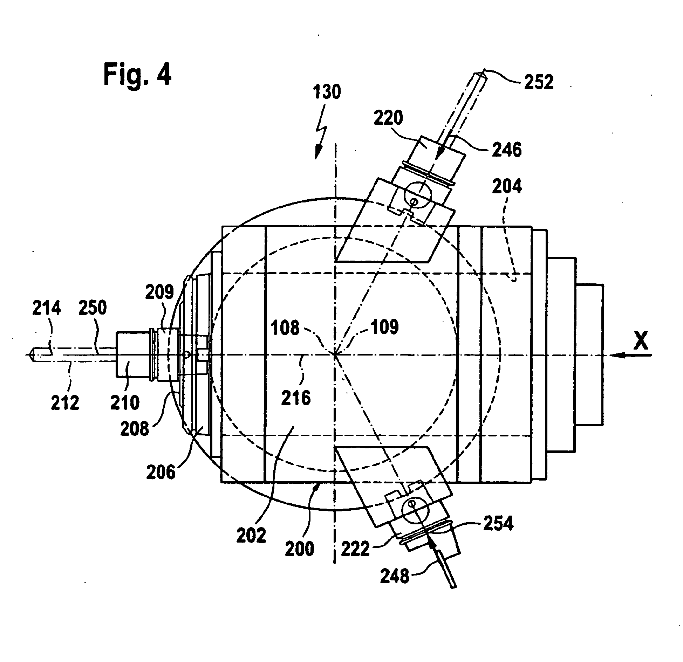

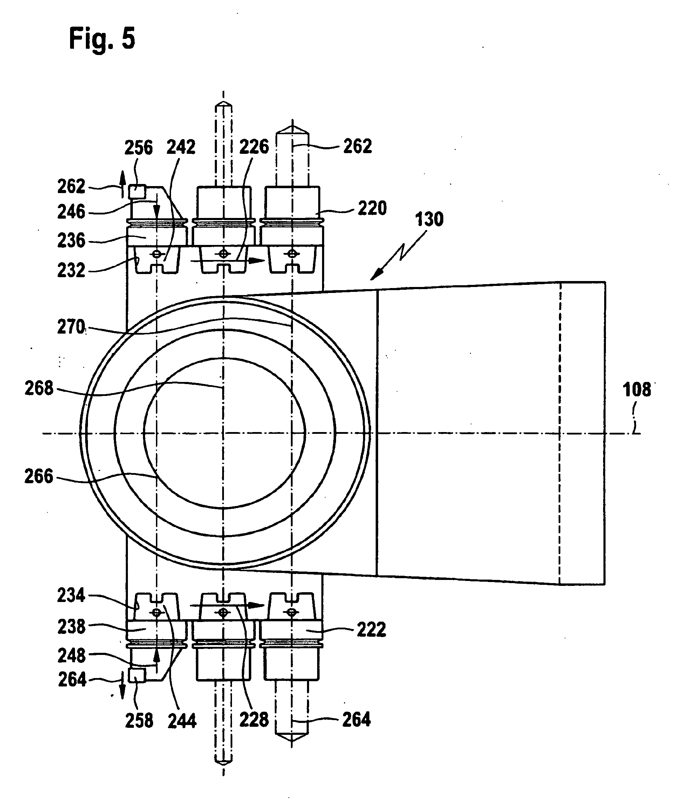

Bei diesem ersten Ausführungsbeispiel ist der Werkzeugträgerkopf 104 als Mehrfachwerkzeugträgerkopf 130 ausgebildet und umfasst eine, wie ergänzend in Figur 4 und 5 dargestellt, Werkzeugspindel 200, welche ein Werkzeugspindelgehäuse 202 aufweist, in welchem ein Spindelmotor 204 gelagert ist, der eine Spindelwelle 206 antreibt, in welche im Bereich eines vorderen Endes 208 in eine Werkzeughalteraufnahme 209 ein Werkzeughalter 210 einsetzbar ist. In der Spindelwelle 206 sitzt somit ein antreibbares Werkzeug 212, wobei eine Werkzeugachse 214 koaxial zu einer Werkzeugspindelachse 216 verläuft, welche die Drehachse der Spindelwelle 206 darstellt.

Die Werkzeugspindel 200 hat beispielsweise eine Leistung von mindestens 8 kW und erreicht Drehzahlen größer 10.000 U/min.

Die Werkzeugachse 214 entspricht bei dem rotierend angetriebenen Werkzeug der Werkzeugrichtung, in dem Fall des rotierend angetriebenen Werkzeugs festgelegt durch die Vorschubachse und/oder die Zustellachse bei der Bearbeitung des Werkstücks mit diesem und liegt dabei in einer Werkzeugebene 250, die durch die Längsachse 108 hindurch verläuft.

An dem Werkzeugspindelgehäuse 202 sind, wie ebenfalls in Figur 4 und 5 dargestellt, und zwar auf gegenüberliegenden Seiten der Längsachse 108 als Zusatzwerkzeugträger Linearwerkzeugträger 220, 222 angeordnet, welche jeweils in einer Reihenrichtung 226, 228 aufeinanderfolgend angeordnete Werkzeughalteraufnahmen 232, 234 aufweist, in welche Werkzeughalter 236, 238 einsetzbar sind.

Die Werkzeughalter 236, 238 sind alle so ausgebildet, dass jeder in die Werkzeughalteraufnahmen 232, 234 der Linearwerkzeugträger 220, 222 einsetzbare Einsetzkörper 242, 244 in einer Einsetzrichtung 246, 248 einsetzbar ist, die, wie insbesondere in Figur 4 dargestellt, in weiteren Werkzeugebenen 252, 254 liegen, welche auch durch die Längsachse 108 hindurch verlaufen, so dass und sich die Werkzeugebenen 250, 252 254 in der Längsachse 108 als einer gemeinsamen Gerade 109 schneiden.

Außerdem verlaufen auch die Reihenrichtungen 226, 228 der Werkzeughalteraufnahmen 232, 234 parallel zu den Werkzeugebenen 252, 254.

Sämtliche Werkzeughalter 236, 238 sind mit Werkzeugen 256 bzw. 258 bestückt, die mindestens eine parallel zu der jeweiligen Werkzeugebene 252, 254 verlaufende Werkzeugrichtung 262, 264, festgelegt durch die Vorschub-und/oder Zustellrichtung der Werkzeuge 256, 258 bei der Bearbeitung eines Werkstücks W mit diesem, aufweisen, wobei die Werkzeugrichtungen 262, 264 vorzugsweise in den Werkzeugebenen 256, 258 liegen.

Ferner erstrecken sich die Werkzeugrichtungen 262, 264 quer, insbesondere senkrecht zu den Reihenrichtungen 226, 228.

Die Werkzeugebenen 252, 254 stehen vorzugsweise nicht senkrecht zur Werkzeugspindelachse 216 und zur Werkzeugebene 250, sondern schließen jeweils mit dieser einen Winkel von ungefähr 120° ein, so dass bezogen auf die Längsachse 108 zwischen der Werkzeugebene 250 und der Werkzeugebene 252 sowie zwischen der Werkzeugebene 250 und der Werkzeugebene 254 ein Winkel von 120° besteht und auf einer dem Werkzeug 212 abgewandten Seite die Werkzeugebenen 252, 254 ebenfalls einen Winkel von ungefähr 120° miteinander einschließen.

Außerdem sind die in der jeweiligen Reihenrichtung 226, 228 aufeinanderfolgend angeordneten Werkzeuge durch Verschieben der Werkzeugspindel 200 in Richtung der Längsachse 108 in Einsatz bringbar.

Ferner liegen, wie in Figur 5 dargestellt, die jeweils auf gegenüberliegenden Seiten der Längsachse 108 angeordnete Werkzeuge 256, 258 in senkrecht zur Längsachse 108 verlaufenden Ausrichtebenen 266, 268, 270, so dass je nach Position der Werkzeugspindel 200 die Werkzeuge 256, 258 an dem Werkstück in Einsatz bringbar sind, die in einer der Ausrichtebenen 266, 268, 270 liegen, wobei ein Wechsel des Werkzeugs allein durch Drehen der gesamten Werkzeugspindel 200 um die Längsachse 108 möglich ist.

Außerdem ist vorzugsweise die Ausrichtebene 268 so angeordnet, dass in dieser nicht nur die Vorschubrichtungen 262, 264 der Werkzeuge 256, 258 der Linearwerkzeugträger 220, 222 liegen, sondern außerdem auch noch die Werkzeugachse 214 des Werkzeugs 212.

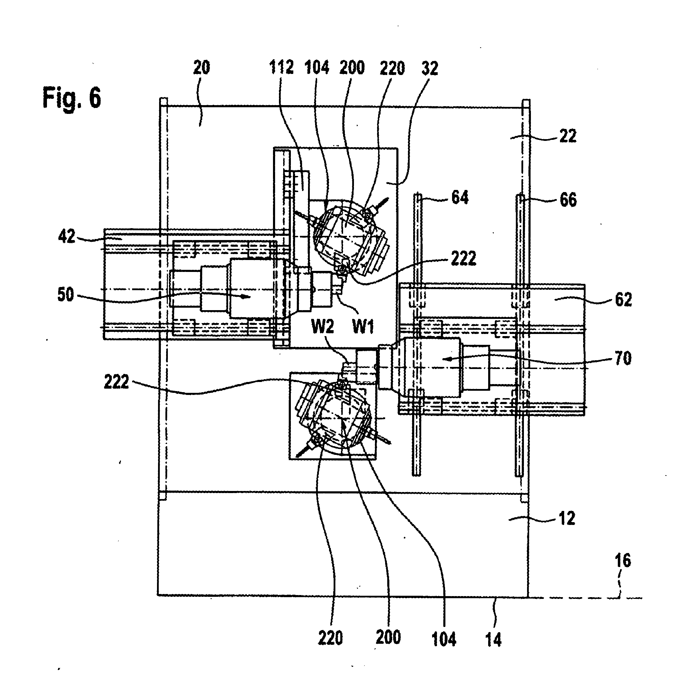

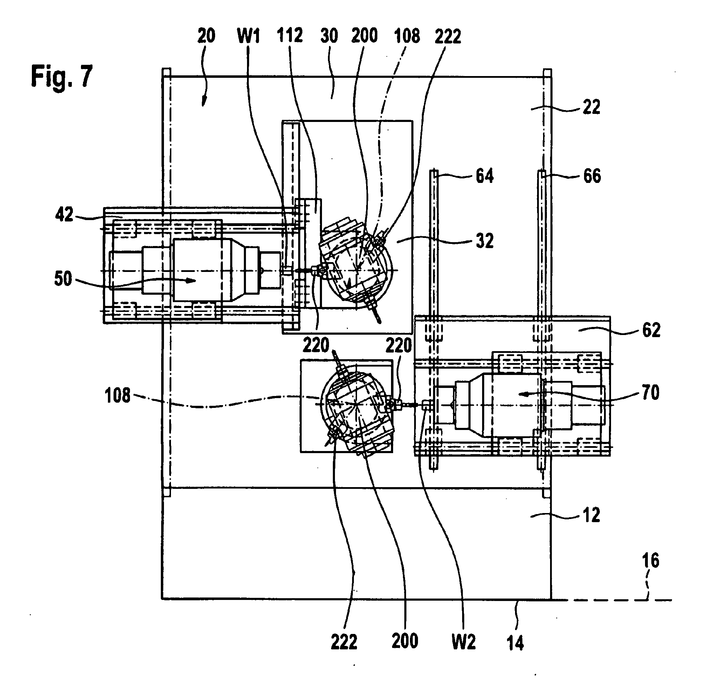

Der wechselnde Einsatz der verschiedenen Werkzeuge 212, 256, 258 mit ihren Vorschubrichtungen 214, 262, 264 senkrecht oder parallel zu der jeweiligen Werkstückspindelachse 56, 76 ist in den Figuren 6 und 7 dargestellt, wobei der Vorteil dieser Lösung darin besteht, dass die nicht im Einsatz am Werkstück befindlichen Werkzeuge bezogen auf die Längsachse 108 einen derartigen Winkelabstand voneinander aufweisen, dass diese die Bearbeitung des Werkstücks in der jeweiligen Werkstückspindeleinheit 50, 70 nicht behindern.

Durch die Anordnung aller Werkzeuge 212, 256, 258 mit ihren Vorschubrichtungen 214, 262, 264 in den Werkzeugebenen 250, 252, 254, die sich alle in der Geraden 109 schneiden, wirken die bei dem Einsatz eines derartigen Werkzeugs 212, 256, 258 auftretenden Kräfte alle radial zur Geraden 109 und werden somit auch radial in den Werkzeugträgerkopf 104 eingeleitet.

Fällt die Gerade 109 noch mit der Längsachse 108 zusammen, so entsteht beim Einsatz dieser Werkzeuge im Wesentlichen keine Torsionsbelastung des Führungsarms 106.

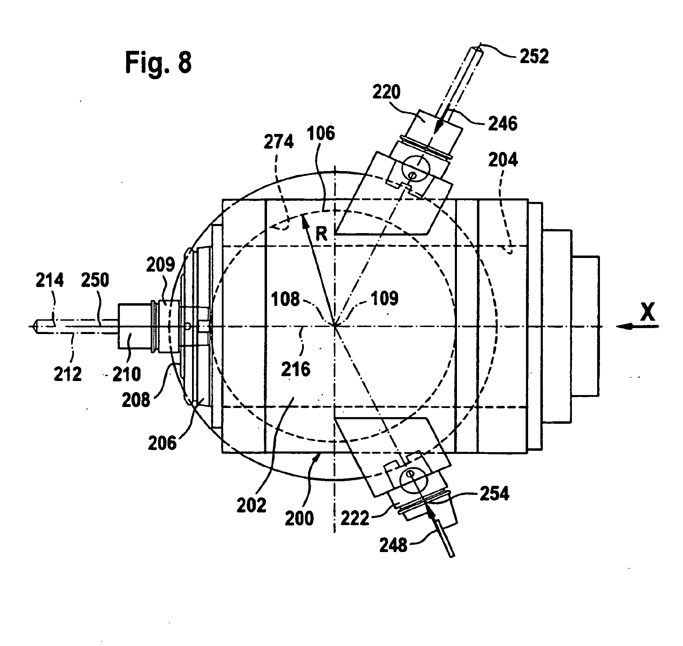

In Abweichung von den Verhältnissen bei dem ersten Ausführungsbeispiel besteht aber auch, wie in Figur 8 dargestellt, die Gerade 109 innerhalb eines geometrischen Zylinderraums 274 vorzusehen, welcher sich um die Längsachse 108 als Zylinderachse herum mit einem Radius R erstreckt, der maximal einen mittleren äußeren Radius des Führungsarms 106 entspricht, vorzugsweise kleiner als dieser ist, und beispielsweise einen Radius R aufweist, der ungefähr einem halben mittleren Radius des Führungsarms 106, noch besser dem ungefähr 0,2-fachen Radius des Führungsarms 106 entspricht.

Solange die Gerade 109 innerhalb eines derart dimensionierten Zylinderraums 274 um die Längsachse 108 als Zylinderachse liegt, sind die bei einer Bearbeitung mit den in den Werkzeugebenen 250, 252, 254 angeordneten Werkzeugen 214, 256, 258 auftretenden Kräfte und dadurch bedingten Drehmomente so gering, dass diese problemlos von dem Drehantrieb 121 oder einer dieser zugeordneten Brems- oder Blockiervorrichtung aufgenommen werden können.

Durch diese konstruktive Maßnahme wird die Präzision der Werkzeugmaschine erheblich verbessert, da die Werkzeugträgereinheit 100 aufgrund ihrer Konstruktion in der Lage ist, diese Kräfte optimal und mit der geringst möglichen Deformation aufzunehmen.

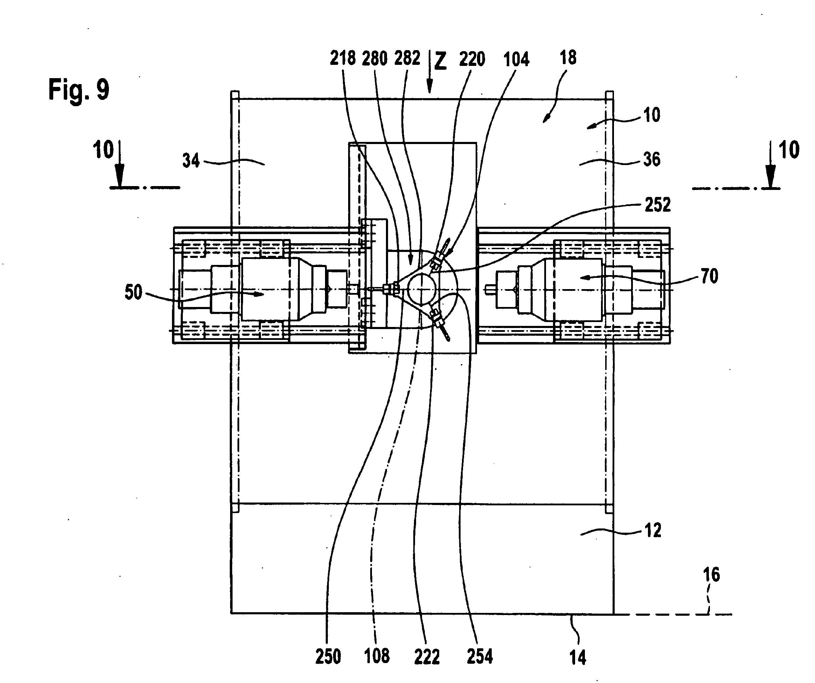

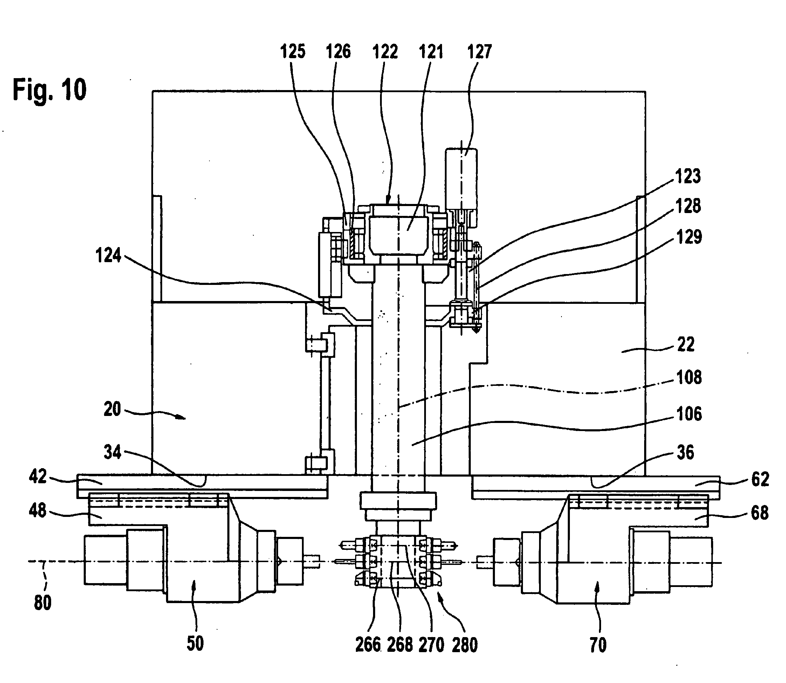

Bei einem zweiten Ausführungsbeispiel, dargestellt in Figur 9 und 10 sind ebenfalls diejenigen Elemente, die mit denen der voranstehenden Ausführungsbeispiele identisch sind, mit denselben Bezugszeichen versehen, so dass hinsichtlich derselben vollinhaltlich auf die Ausführungen zu den voranstehenden Ausführungsbeispielen Bezug genommen werden kann.

Bei dem zweiten Ausführungsbeispiel ist der Werkzeugträgerkopf 104 als Mehrfachwerkzeugträgerkopf 280, insbesondere als Mehrfachlinearwerkzeugträger ausgebildet, dass er ähnlich, wie beim vierten Ausführungsbeispiel, drei Werkzeugebenen 250, 252, 254 aufweist, die alle einen Winkel von 120° zwischen sich einschließen, und in welchen jeweils in der entsprechenden Reihenrichtung aufeinanderfolgend an Werkzeuge angeordnet sind, wobei auch in diesem Fall die Werkzeuge in aufeinanderfolgend angeordneten Ausrichtebenen 266, 268, 270 liegen.

Im Gegensatz zum ersten Ausführungsbeispiel sind jedoch beispielsweise alle Werkzeuge nicht angetriebene Werkzeuge. Diese werden lediglich als stehende Werkzeuge in Zusammenhang mit einer der Werkstückspindeleinheiten 50, 70 eingesetzt.

Ein Wechsel des jeweiligen Werkzeugs ist in einfacher Weise dadurch möglich, dass ein sämtliche Werkzeughalteraufnahmen tragender Basiskörper 282 des Mehrfachlinearwerkzeugträgers 280 um die Längsachse 108 drehbar und in Richtung der Längsachse 108 verschiebbar ist.

## Patentansprüche

1. Werkzeugmaschine umfassend ein Maschinengestell (10), eine am Maschinengestell (10) angeordnete erste Werkstückträgereinheit (50, 70) mit einer Werkstückaufnahme (55, 75), mindestens eine an dem Maschinengestell (10) angeordnete Werkzeugträgereinheit (100), welche eine Werkzeugträgerbasis (102) und einen relativ zur Werkzeugträgerbasis (102) mittels eines Führungsarms (106) längs einer Vorschubachse (Y) bewegbaren und um eine zur Vorschubachse (Y) parallele Drehachse (108) drehbaren Werkzeugträgerkopf (104) aufweist, der als Mehrfachwerkzeugträgerkopf (130) ausgebildet ist, wobei an dem Mehrfachwerkzeugträgerkopf (130) mindestens ein um eine Werkzeugachse (214) drehend antreibbares Werkzeug (256, 258) zur Bearbeitung eines in der Werkstückaufnahme (55, 75) gehaltenen Werkstücks (W) angeordnet ist, wobei der Mehrfachwerkzeugträgerkopf (130) mindestens zwei Werkzeugebenen (250, 252, 254) aufweist, in denen mindestens jeweils ein Werkzeug (212, 256, 258) sich mit mindestens einer seiner Werkzeugrichtungen (214, 262, 264) erstreckt, und wobei die mindestens zwei Werkzeugebenen (252, 254) des Mehrfachwerkzeugträgerkopfes (130) parallel zu der Drehachse (108) durch eine gemeinsame Gerade (109) hindurchverlaufen, die innerhalb eines geometrischen Zylinderraumes (274) um die Drehachse (108) liegt, der einen einem mittleren Radius des Führungsarms (106) entsprechenden Radius (R) aufweist, und einen Arbeitsraum (40), in welchem ein in der Werkstückaufnahme (55, 75) gehaltenes Werkstück (W) mit dem Werkzeug (256, 258) bearbeitbar ist,
**dadurch gekennzeichnet, dass** der Mehrfachwerkzeugträgerkopf (130) fest mit dem Führungsarm (106) verbunden ist und dass der Mehrrachwerkzeugträgerkopf (130) eine Werkzeugspindel (200) umfasst, die einen Spindelmotor (204) mit einer von diesem angetriebenen Spindelwelle (206) umfasst, in welcher das drehend antreibbare Werkzeug (212) sitzt.

2. Werkzeugmaschine nach Anspruch 1, **dadurch gekennzeichnet, dass** der Zylinderraum (274) einen dem 0,5-fachen mittleren Radius des Führungsarms (106) entsprechenden Radius (R) aufweist.

3. Werkzeugmaschine nach Anspruch 2, **dadurch gekennzeichnet, dass** der Zylinderraum (274) einen dem 0,2-fachen mittleren Radius des Führungsarms (106) entsprechenden Radius (R) aufweist.

4. Werkzeugmaschine nach Anspruch 1, **dadurch gekennzeichnet, dass** die gemeinsame Gerade (109) mit der Drehachse (108) zusammenfällt.

5. Werkzeugmaschine nach einem der voranstehenden Ansprüche, **dadurch gekennzeichnet, dass** alle Werkzeugebenen (250, 252, 254) des Werkzeugträgerkopfes (104) durch die gemeinsame Gerade (109) hindurchverlaufen.

6. Werkzeugmaschine nach einem der voranstehenden Ansprüche, **dadurch gekennzeichnet, dass** sich in mindestens einer der Werkzeugebenen (252, 254) mehrere Werkzeuge (256, 258) mit ihren Vorschubrichtungen (262, 264) erstrecken.

7. Werkzeugmaschine nach Anspruch 6, **dadurch gekennzeichnet, dass** in einer der Werkzeugebenen (252, 254) mehrere sich mit ihrer Vorschubrichtung (262, 264) in diesen erstreckende Werkzeuge (256, 258) angeordnet sind.

8. Werkzeugmaschine nach Anspruch 6 oder 7, **dadurch gekennzeichnet, dass** die mehreren sich mit ihrer Werkzeugrichtung (262, 264) in der jeweiligen Werkzeugebene (252, 254) erstreckenden Werkzeuge (256, 258) in einem Linearwerkzeugträger (220, 222) des Werkzeugträgerkopfes (104) angeordnet sind.

9. Werkzeugmaschine nach Anspruch 8, **dadurch gekennzeichnet, dass** der Linearwerkzeugträger (220, 222) in einer zur Vorschubrichtung des Werkzeugträgerkopfes (104) relativ zur Werkzeugträgerbasis parallelen Reihenrichtung (224, 228) aufgereihte Werkzeugaufnahmen (232, 234) aufweist.

10. Werkzeugmaschine nach einem der voranstehenden Ansprüche, **dadurch gekennzeichnet, dass** ein in einer (250) der Werkzeugebenen (250, 252, 254) sich mit seiner Werkzeugrichtung (214) erstreckendes Werkzeug (212) ein in einer Werkzeugspindel (200) angeordnetes Werkzeug (212) ist, welches sich mit seiner Werkzeugachse (214) in der Werkzeugebene (250) erstreckt.

11. Werkzeugmaschine nach Anspruch 10, **dadurch gekennzeichnet, dass** die Werkzeugachse (214) quer zur Drehachse (108) ausgerichtet ist.

12. Werkzeugmaschine nach Anspruch 11, **dadurch gekennzeichnet, dass** die Werkzeugachse (214) senkrecht zur Drehachse (108) verläuft.

13. Werkzeugmaschine nach einem der voranstehenden Ansprüche, **dadurch gekennzeichnet, dass** aufeinanderfolgende Werkzeugebenen (250, 252, 254) einen Winkel einschließen, der größer als 90° und kleiner als 180° ist.

14. Werkzeugmaschine nach Anspruch 13, **dadurch gekennzeichnet, dass** der Winkel größer als 100° und kleiner als 170° ist.

15. Werkzeugmaschine nach Anspruch 14, **dadurch gekennzeichnet, dass** der Winkel größer als 110° und kleiner als 160° ist.

16. Werkzeugmaschine nach einem der voranstehenden Ansprüche, **dadurch gekennzeichnet, dass** der Werkzeugträgerkopf (104) eine Werkzeugspindel (200) umfasst und dass ein Werkzeugspindelgehäuse (202) des Werkzeugträgerkopfes (104) einen Zusatzwerkzeugträger (220, 222) aufweist.

17. Werkzeugmaschine nach Anspruch 16, **dadurch gekennzeichnet, dass** der Zusatzwerkzeugträger (220, 222) an dem Werkzeugspindelgehäuse (202) auf mindestens einer Seite einer Werkzeugspindelachse (216) angeordnet ist.

18. Werkzeugmaschine nach Anspruch 16 oder 17, **dadurch gekennzeichnet, dass** das Werkzeugspindelgehäuse (202) auf mehreren Seiten einen Zusatzwerkzeugträger (220, 222) trägt.

19. Werkzeugmaschine nach Anspruch 18, **dadurch gekennzeichnet, dass** das Werkzeugspindelgehäuse (202) auf einander gegenüberliegenden Seiten einen Zusatzwerkzeugträger (220, 222) trägt.

20. Werkzeugmaschine nach Anspruch 19, **dadurch gekennzeichnet, dass** die Zusatzwerkzeugträger (220, 222) auf gegenüberliegenden Seiten der Drehachse (108) angeordnet sind.

21. Werkzeugmaschine nach einem der Ansprüche 16 bis 20, **dadurch gekennzeichnet, dass** die Zusatzwerkzeugträger (220, 222) als Mehrfachwerkzeugträger ausgebildet sind.

22. Werkzeugmaschine nach Anspruch 21, **dadurch gekennzeichnet, dass** der Mehrfachwerkzeugträger als Linearwerkzeugträger (220, 222) ausgebildet ist.

23. Werkzeugmaschine nach Anspruch 22, **dadurch gekennzeichnet, dass** der Linearwerkzeugträger (220, 222) in einer zur Vorschubrichtung (Y) des Werkzeugträgerspindelgehäuses (202) parallelen Reihenrichtung (224, 228) aufgereihte Werkzeugaufnahmen (232, 234) aufweist.

24. Werkzeugmaschine nach Anspruch 22 oder 23, **dadurch gekennzeichnet, dass** alle Werkzeugaufnahmen (232, 234) des Linearwerkzeugträgers (220, 222) in einer Werkzeugebene (252, 254) liegen.

25. Werkzeugmaschine nach einem der Ansprüche 16 bis 24, **dadurch gekennzeichnet, dass** das Werkzeugspindelgehäuse (202) fest mit einem vorderen Ende des Führungsarms (106) verbunden ist.

26. Werkzeugmaschine nach einem der Ansprüche 16 bis 25, **dadurch gekennzeichnet, dass** die Werkzeugspindel (200) eine quer zu der Drehachse (108) ausgerichtete Werkzeugspindelachse (216) aufweist.

27. Werkzeugmaschine nach einem der Ansprüche 16 bis 26, **dadurch gekennzeichnet, dass** die Werkzeugspindel (200) eine quer zu der Vorschubrichtung (Y) ausgerichtete Werkzeugspindelachse (216) aufweist.

28. Werkzeugmaschine nach einem der Ansprüche 16 bis 27, **dadurch gekennzeichnet, dass** eine in dem Werkzeugspindelgehäuse (202) gelagerte Spindelwelle (206) an einem Ende (208) eine Werkzeugaufnahme (209) trägt.

29. Werkzeugmaschine nach Anspruch 28, **dadurch gekennzeichnet, dass** die Werkzeugaufnahme (209) auf einer Seite der Drehachse (108) angeordnet ist.

30. Werkzeugmaschine nach einem der Ansprüche 1 bis 16, **dadurch gekennzeichnet, dass** der Werkzeugträgerkopf (104) als Mehrfachlinearwerkzeugträger (280) ausgebildet ist, der sternförmig um die Drehachse (108) herum angeordnete Linearwerkzeugträger (218, 220, 222) umfasst, die in einer Vorschubrichtung (Y) des Mehrfachlinearwerkzeugträgers (280) parallelen Reihenrichtung (224, 226, 228) aufgereihte Werkzeugaufnahmen (230, 232, 234) aufweisen.

31. Werkzeugmaschine nach Anspruch 27, **dadurch gekennzeichnet, dass** alle Werkzeugaufnahmen (230, 232, 234) jedes der Linearwerkzeugträger (218, 220, 222) in einer Werkzeugebene (250, 252, 254) liegen.

32. Werkzeugmaschine nach einem der voranstehenden Ansprüche, **dadurch gekennzeichnet, dass** an der Werkzeugträgerbasis (102) eine Antriebseinheit (122) für die Bewegung des Führungsarms (106) relativ zur Werkzeugträgerbasis (102) vorgesehen ist.

33. Werkzeugmaschine nach Anspruch 32, **dadurch gekennzeichnet, dass** die Antriebseinheit (122) ein Drehantrieb (121) umfasst, dessen Rotor (126) mit dem Führungsarm (106) verbunden ist und dessen Stator (125) drehfest in einem Gehäuse (124) der Antriebseinheit (122) geführt ist.

34. Werkzeugmaschine nach Anspruch 32 oder 33, **dadurch gekennzeichnet, dass** der Stator (125) des Drehantriebs (121) durch einen Linearantrieb (123) relativ zum Gehäuse (124) der Antriebseinheit (122) verschiebbar ist.

35. Werkzeugmaschine nach einem der Ansprüche 33 bis 34, **dadurch gekennzeichnet, dass** das Gehäuse (124) der Antriebseinheit (122) fest mit der Werkzeugträgerbasis (102) verbunden ist.

36. Werkzeugmaschine nach Anspruch 35, **dadurch gekennzeichnet, dass** die Werkzeugträgerbasis (102) eine Längs-Drehführung (110) für den Führungsarm (106) aufweist.

37. Werkzeugmaschine nach Anspruch 36, **dadurch gekennzeichnet, dass** das Gehäuse (124) der Antriebseinheit (122) mit der Längs-Drehführung (110) verbunden ist.

## Claims

1. A machine tool comprising a machine frame (10); a first workpiece carrier unit (50, 70), which is disposed on the machine frame (10) and has a workpiece receiving means (55, 75); and at least one tool carrier unit (100), which is disposed on the machine frame (10) and has a tool carrier base (102) and a tool carrier head (104); the tool carrier head being movable in relation to the tool carrier base (102) along an axis of advance (Y) by means of a guiding arm (106), being rotatable about an axis of rotation (108) parallel to the axis of advance (Y), and being formed as a multiple tool carrier head (130); at least one tool (256, 258) for machining a workpiece (W) held in the workpiece receiving means (55, 75) being disposed on the multiple tool carrier head (130) and being driveable in rotation about a tool axis (214); the multiple tool carrier head (130) having at least two tool planes (250, 252, 254), in which at least one tool (212, 256, 258) in each case extends with at least one of its tool directions (214, 262, 264), and the at least two tool planes (252, 254) of the multiple tool carrier head (130) running through, parallel to the axis of rotation (108), across a common straight line (109), which lies within a geometric cylindrical space (274) around the axis of rotation (108), the axis of rotation having a radius (R) corresponding to an average radius of the guiding arm (106); and the machine tool also comprising a working space (40), in which a workpiece (W) held in the workpiece receiving means (55, 75) can be machined with the tool (256, 258),
**characterized in that** the multiple tool carrier head (130) is fixedly connected to the guiding arm (106) and **in that** the multiple tool carrier head (130) comprises a tool spindle (200), which includes a spindle motor (204) with a spindle shaft (206) driven by the motor, the tool (212) driveable in rotation being seated in the shaft.

2. A machine tool according to Claim 1, **characterized in that** the cylindrical space (274) has a radius (R) corresponding to 0.5 of the average radius of the guiding arm (106).

3. A machine tool according to Claim 2, **characterized in that** the cylindrical space (274) has a radius (R) corresponding to 0.2 of the average radius of the guiding arm (106).

4. A machine tool according to Claim 1, **characterized in that** the common straight line (109) coincides with the axis of rotation (108).

5. A machine tool according to any of the preceding claims, **characterized in that** all tool planes (250, 252, 254) of the tool carrier head (104) run across the common straight line (109).

6. A machine tool according to any of the preceding claims, **characterized in that** a number of tools (256, 258) extend with their directions of advance (262, 264) in at least one of the tool planes (252, 254).

7. A machine tool according to Claim 6, **characterized in that**, in one of the tool planes (252, 254), a number of tools (256, 258) are disposed so as to extend in these planes with their direction of advance (262, 264).

8. A machine tool according to Claim 6 or 7, **characterized in that** the plurality of tools (256, 258) that extend with their tool direction (262, 264) in the respective tool plane (252, 254) are disposed in a linear tool carrier (220, 222) of the tool carrier head (104).

9. A machine tool according to Claim 8, **characterized in that** the linear tool carrier (220, 222) has tool receiving means (232, 234) that are lined up in the direction of a row (224, 228), which is parallel to the direction of advance of the tool carrier head (104) relative to the tool carrier base.

10. A machine tool according to any of the preceding claims, **characterized in that** a tool (212) that extends with its tool direction (214) in one (250) of the tool planes (250, 252, 254) is a tool (212) that is disposed in a tool spindle (200) and extends with its tool axis (214) in the tool plane (250).

11. A machine tool according to Claim 10, **characterized in that** the tool axis (214) is aligned transversely to the axis of rotation (108).

12. A machine tool according to Claim 11, **characterized in that** the tool axis (214) runs perpendicularly to the axis of rotation (108).

13. A machine tool according to any of the preceding claims, **characterized in that** successive tool planes (250, 252, 254) form an included angle which is greater than 90° and less than 180°.

14. A machine tool according to Claim 13, **characterized in that** the angle is greater than 100° and less than 170°.

15. A machine tool according to Claim 14, **characterized in that** the angle is greater than 110° and less than 160°.

16. A machine tool according to any of the preceding claims, **characterized in that** the tool carrier head (104) comprises a tool spindle (200) and **in that** a tool spindle housing (202) of the tool carrier head (104) has a supplementary tool carrier (220, 222).

17. A machine tool according to Claim 16, **characterized in that** the supplementary tool carrier (220, 222) is disposed on the tool spindle housing (202) on at least one side of a tool spindle axis (216).

18. A machine tool according to Claim 16 or 17, **characterized in that** the tool spindle housing (202) carries a supplementary tool carrier (220, 222) on more than one side.

19. A machine tool according to Claim 18, **characterized in that** the tool spindle housing (202) carries a supplementary tool carrier (220, 222) on mutually opposite sides.

20. A machine tool according to Claim 19, **characterized in that** the additional tool carriers (220, 222) are disposed on opposite sides of the axis of rotation (108).

21. A machine tool according to any of Claims 16 to 20, **characterized in that** the supplementary tool carriers (220, 222) are formed as multiple tool carriers.

22. A machine tool according to Claim 21, **characterized in that** the multiple tool carrier is formed as a linear tool carrier (220, 222).

23. A machine tool according to Claim 22, **characterized in that** the linear tool carrier (220, 222) has tool receiving means (232, 234) that are disposed in the direction of a row (226, 228) parallel to the direction of advance (Y) of the tool carrier spindle housing (202).

24. A machine tool according to Claim 22 or 23, **characterized in that** all the tool receiving means (232, 234) of the linear tool carrier (220, 222) lie in one tool plane (252, 254).

25. A machine tool according to any of Claims 16 to 24, **characterized in that** the tool spindle housing (202) is fixedly connected to a front end of the guiding arm (106).

26. A machine tool according to any of Claims 16 to 25, **characterized in that** the tool spindle (200) has a tool spindle axis (216) aligned transversely to the axis of rotation (108).

27. A machine tool according to any of Claims 16 to 26, **characterized in that** the tool spindle (200) has a tool spindle axis (216) aligned transversely to the direction of advance (Y).

28. A machine tool according to any of Claims 16 to 27, **characterized in that** a spindle shaft (206) mounted in the tool spindle housing (202) carries a tool receiving means (209) at one end (208).

29. A machine tool according to Claim 28, **characterized in that** the tool receiving means (209) is disposed on one side of the axis of rotation (108).

30. A machine tool according to any of Claims 1 to 18, **characterized in that** the tool carrier head (104) is formed as a multiple linear tool carrier (280) which comprises linear tool carriers (218, 220, 222) that are disposed in a star shape around the axis of rotation (108) and have tool receiving means (230, 232, 234) that are disposed in the direction of a row (224, 226, 228) parallel to the direction of advance (Y) of the multiple linear tool carrier (280).

31. A machine tool according to Claim 27, **characterized in that** all the tool receiving means (230, 232, 234) of each of the linear tool carriers (218, 220, 222) lie in one tool plane (250, 252, 254).

32. A machine tool according to any of the preceding claims, **characterized in that** a drive unit (122) is provided on the tool carrier base (102) for the movement of the guiding arm (106) relative to the tool carrier base (102).

33. A machine tool according to Claim 32, **characterized in that** the drive unit (122) comprises a rotary drive (121), the rotor (126) of which is connected to the guiding arm (106) and the stator (125) of which is guided in rotationally fixed manner in a housing (124) of the drive unit (122).

34. A machine tool according to Claim 32 or 33, **characterized in that** the stator (125) of the rotary drive (121) is displaceable in relation to the housing (124) of the drive unit (122) by means of a linear drive (123).

35. A machine tool according to one of Claims 33 to 34, **characterized in that** the housing (124) of the drive unit (122) is fixedly connected to the tool carrier base (102).

36. A machine tool according to Claim 35, **characterized in that** the tool carrier base (102) has a longitudinal/rotary guide (110) for the guiding arm (106).

37. A machine tool according to Claim 36, **characterized in that** the housing (124) of the drive unit (122) is connected to the longitudinal/rotary guide (110).

## Revendications

1. Machine-outil comprenant un bâti de machine (10), une première unité porte-pièce (50, 70) disposée sur le bâti de machine (10) avec un moyen de réception de pièce (55, 75), au moins une unité porte-outil (100) disposée sur le bâti de machine (10), laquelle comporte une base de porte-outil (102) et une tête de porte-outil (104) déplaçable par rapport à la base de porte-outil (102) au moyen d'un bras de guidage (106) le long d'un axe d'avancement (Y) et rotative autour d'un axe de rotation (108) parallèle à l'axe d'avancement (Y), laquelle est réalisée comme une tête support d'outils multiples (130), au moins un outil (256, 258) entraînable en rotation autour d'un axe d'outil (214) pour l'usinage d'une pièce (W) maintenue dans le moyen de réception de pièce (55, 75) étant disposé sur la tête support d'outils multiples (130), ladite tête support d'outils multiples (130) comportant au moins deux plans d'outil (250, 252, 254) sur lesquels au moins un outil respectif (212, 256, 258) s'étend par au moins une de ses directions d'outil (214, 262, 264), les au moins deux plans d'outil (252, 254) de la tête support d'outils multiples (130) étant traversés par une droite (109) commune parallèlement à l'axe de rotation (108), ladite droite s'étendant à l'intérieur d'un espace géométrique cylindrique (274) autour de l'axe de rotation (108), lequel présente un rayon (R) correspondant à un rayon médian du bras de guidage (106), et un espace de travail (40), où une pièce (W) maintenue dans le moyen de réception de pièce (55, 75) est usinable par l'outil (256, 258), **caractérisée en ce que** la tête support d'outils multiples (130) est fixement raccordée au bras de guidage (106) et **en ce que** la tête support d'outils multiples (130) comprend une broche d'outil (200), laquelle comporte un moteur de broche (204) avec un arbre de broche (206) entraîné par celui-ci, où est logé l'outil (212) entraînable en rotation.

2. Machine-outil selon la revendication 1, **caractérisée en ce que** l'espace cylindrique (274) présente un rayon (R) correspondant à 0,5 fois le rayon médian du bras de guidage (106).

3. Machine-outil selon la revendication 2, **caractérisée en ce que** l'espace cylindrique (274) présente un rayon (R) correspondant à 0,2 fois le rayon médian du bras de guidage (106).

4. Machine-outil selon la revendication 1, **caractérisée en ce que** la droite commune (109) coïncide avec l'axe de rotation (108).

5. Machine-outil selon l'une des revendications précédentes, **caractérisée en ce que** tous les plans d'outil (250, 252, 254) de la tête de porte-outil (104) sont traversés par la droite (109).

6. Machine-outil selon l'une des revendications précédentes, **caractérisée en ce que** plusieurs outils (256, 258) s'étendent par leurs directions d'avance (262, 264) sur au moins un des plans d'outil (252, 254).

7. Machine-outil selon la revendication 6, **caractérisée en ce que** plusieurs outils (256, 258) s'étendent par leur direction d'avance (262, 264) sur un des plans d'outil (252, 254).

8. Machine-outil selon la revendication 6 ou la revendication 7, **caractérisée en ce que** les plusieurs outils (256, 258) s'étendant par leur direction d'outil (262, 264) sur les plans d'oùtil respectifs (252, 254) sont disposés dans un porte-outil linéaire (220, 222) de la tête de porte-outil (104).

9. Machine-outil selon la revendication 8, **caractérisée en ce que** le porte-outil linéaire (220, 222) comporte des réceptions d'outil (232, 234) rangées dans une direction d'alignement (224, 228) parallèle à la direction d'avance de la tête de porte-outil (104) par rapport à la base de porte-outil.

10. Machine-outil selon l'une des revendications précédentes, **caractérisée en ce qu'**un outil (212) s'étendant par sa direction d'outil (214) sur un (250) des plans d'outil (250, 252, 254) est un outil (212) disposé dans une broche d'outil (200), lequel s'étend sur le plan d'outil (250) par son axe d'outil (214).

11. Machine-outil selon la revendication 10, **caractérisée en ce que** l'axe d'outil (214) est orienté transversalement à l'axe de rotation (108).

12. Machine-outil selon la revendication 11, **caractérisée en ce que** l'axe d'outil (214) s'étend perpendiculairement à l'axe de rotation (108).

13. Machine-outil selon l'une des revendications précédentes, **caractérisée en ce que** des plans d'outil successifs (250, 252, 254) forment un angle supérieur à 90° et inférieur à 180°.

14. Machine-outil selon la revendication 13, **caractérisée en ce que** l'angle est supérieur à 100° et inférieur à 170°.

15. Machine-outil selon la revendication 14, **caractérisée en ce que** l'angle est supérieur à 110° et inférieur à 160°.

16. Machine-outil selon l'une des revendications précédentes, **caractérisée en ce que** la tête de porte-outil (104) comprend une broche d'outil (200) et **en ce qu'**un carter de broche d'outil (202) de la tête de porte-outil (104) comporte un porte-outil additionnel (220, 222).

17. Machine-outil selon la revendication 16, **caractérisée en ce que** le porte-outil additionnel (220, 222) sur le carter de broche d'outil (202) est disposé sur au moins un côté d'un axe de broche d'outil (216).

18. Machine-outil selon la revendication 16 ou la revendication 17, **caractérisée en ce que** le carter de broche d'outil (202) supporte un porte-outil additionnel (220, 222) sur plusieurs côtés.

19. Machine-outil selon la revendication 18, **caractérisée en ce que** le carter de broche d'outil (202) supporte un porte-outil additionnel (220, 222) sur des côtés opposés l'un à l'autre.

20. Machine-outil selon la revendication 19, **caractérisée en ce que** les porte-outils additionnels (220, 222) sont disposés sur des côtés opposés de l'axe de rotation (108).

21. Machine-outil selon l'une des revendications 16 à 20, **caractérisée en ce que** le porte-outil additionnel (220, 222) est réalisé comme tête support d'outils multiples.

22. Machine-outil selon la revendication 21, **caractérisée en ce que** la tête support d'outils multiples est réalisée comme porte-outil linéaire (220, 222).

23. Machine-outil selon la revendication 22, **caractérisée en ce que** le porte-outil linéaire (220, 222) comporte des réceptions d'outil (232, 234) rangées dans une direction d'alignement (224, 228) parallèle à la direction d'avancement (Y) du carter de broche d'outil (202).

24. Machine-outil selon la revendication 22 ou la revendication 23, **caractérisée en ce que** toutes les réceptions d'outil (232, 234) du porte-outil linéaire (220, 222) sont situées sur un plan d'outil (252, 254).

25. Machine-outil selon l'une des revendications 16 à 24, **caractérisée en ce que** le carter de broche d'outil (202) est fixement raccordé à une extrémité avant du bras de guidage (106).

26. Machine-outil selon l'une des revendications 16 à 25, **caractérisée en ce que** la broche d'outil (200) présente un axe de broche d'outil (216) orienté transversalement à l'axe de rotation (108).

27. Machine-outil selon l'une des revendications 16 à 26, **caractérisée en ce que** la broche d'outil (200) présente un axe de broche d'outil (216) orienté transversalement à la direction d'avance (Y).

28. Machine-outil selon l'une des revendications 16 à 27, **caractérisée en ce qu'**un arbre de broche (206) monté dans le carter de broche d'outil (202) supporte un moyen de réception d'outil (209) à une extrémité (208).

29. Machine-outil selon la revendication 28, **caractérisée en ce que** le moyen de réception d'outil (209) est disposé sur un côté de l'axe de rotation (108).

30. Machine-outil selon l'une des revendications 1 à 16, **caractérisée en ce que** la tête de porte-outil (104) est réalisée comme porte-outils multiples linéaire (280) comprenant des porte-outil linéaires (218, 220, 222) disposés en étoile tout autour de l'axe de rotation (108), lesquels comportent des réceptions d'outil (230, 232, 234) rangées dans une direction d'alignement (224, 226, 228) parallèle à une direction d'avance (Y) du porte-outils multiples linéaire (280).

31. Machine-outil selon la revendication 27, **caractérisée en ce que** toutes les réceptions d'outil (230, 232, 234) de chacun des porte-outils linéaires (218, 220, 222) sont situées sur un plan d'outil (250, 252, 254).

32. Machine-outil selon l'une des revendications précédentes, **caractérisée en ce qu'**une unité d'entraînement (122) pour le déplacement du bras de guidage (106) par rapport à la base de porte-outil (102) est prévue sur la base de porte-outil (102).

33. Machine-outil selon la revendication 32, **caractérisée en ce que** l'unité d'entraînement (122) comprend un entraînement rotatif (121) dont le rotor (126) est raccordé au bras de guidage (106) et dont le stator (125) est guidé fixement en rotation dans un carter (124) de l'unité d'entraînement (122).

34. Machine-outil selon la revendication 32 ou la revendication 33, **caractérisée en ce que** le stator (125) de l'entraînement rotatif (121) est déplaçable par rapport au carter (124) de l'unité d'entraînement (122) au moyen d'un entraînement linéaire (123).

35. Machine-outil selon l'une des revendications 33 à 34, **caractérisée en ce que** le carter (124) de l'unité d'entraînement (122) est fixement raccordé à la base de porte-outil (102).

36. Machine-outil selon la revendication 35, **caractérisée en ce que** la base de porte-outil (102) comporte un guidage longitudinal rotatif (110) pour le bras de guidage (106).

37. Machine-outil selon la revendication 36, **caractérisée en ce que** le carter (124) de l'unité d'entraînement (122) est raccordé au guidage longitudinal rotatif (110).
